# EUROPEAN PATENT APPLICATION

(11) **EP 4 510 742 A1**
(43) Date of publication of application: **19.02.2025**
(21) Application number: 22936976.4
(22) Date of filing: 15.04.2022
(51) Int. Cl.: H04W 72/12

(54) **DATA TRANSMISSION METHOD/APPARATUS, DEVICE, AND STORAGE MEDIUM**

(71) Applicant: Beijing Xiaomi Mobile Software Co., Ltd., Beijing 100085 (CN)
(72) Inventor: WU, Yumin, Beijing 100085 (CN)
(74) Representative: Stöckeler, Ferdinand
(86) International application number: PCT/CN2022/087231
(87) International publication number: WO 2023/197331

(57) **Abstract**

The present disclosure relates to the technical field of communications, and provides a data transmission method/apparatus, a device, and a storage medium. The method comprises: a non-connected UE can obtain indication information sent by a network device, the indication information being used for indicating that the non-connected UE needs to perform data transmission; and then the UE can trigger a non-connected data transmission process to perform the data transmission. Therefore, in an embodiment of the present disclosure, when needing to perform the data transmission, the non-connected UE can directly trigger the non-connected data transmission process to perform the data transmission, and does not need to perform the data transmission after performing a random access process to access a connected state, thereby reducing the delay of data transmission.

## Description

### TECHNICAL FIELD

The present disclosure relates to the field of communication technology, in particular to a data transmission method, a data transmission apparatus, a data transmission device and a storage medium.

### BACKGROUND

In a communication system, in a case that a User Equipment (UE) is in a non-connected state and a network device needs to send downlink data to the UE, the UE needs to be switched into a connected state at first.

However, in the related art, the UE can only receive the downlink data from the network device after the UE has completed a connection procedure and entered the connected state, so a transmission delay is relatively large.

### SUMMARY

An object of the present disclosure is to provide a data transmission method, an apparatus, a device and a storage medium, so as to prevent the occurrence of data transmission delay.

In a first aspect, the present disclosure provides in some embodiments a data transmission method for a UE in a non-connected state, including: obtaining indication information sent by a network device, the indication information being used to indicate the UE in the non-connected state to perform data transmission; and triggering a non-connected state data transmission procedure to perform data transmission.

Optionally, in an embodiment of the present disclosure, the indication information includes at least one of: a first message for indicating the UE in the non-connected state to perform data reception; a second message for indicating the UE in the non-connected state to perform data reception through a first bearer; or a third message for indicating an initiation mode of the non-connected state data transmission procedure.

Optionally, in an embodiment of the present disclosure, the obtaining indication information sent by a network device includes any one of: obtaining the indication information sent by the network device through a short message; obtaining the indication information sent by the network device through a paging message; or obtaining the indication information sent by the network device through the short message and the paging message.

Optionally, in an embodiment of the present disclosure, the data transmission method further includes determining non-connected state data transmission configuration information.

Optionally, in an embodiment of the present disclosure, the non-connected state data transmission configuration information includes at least one of: a fourth message for indicating whether or not the UE in the non-connected state performs data reception; a fifth message for indicating whether or not the UE in the non-connected state performs data reception through a first bearer; or a sixth message for indicating an initiation mode of the non-connected state data transmission procedure.

Optionally, in an embodiment of the present disclosure, the first bearer includes at least one of: a bearer type indicator; a bearer identifier; a session identifier; a data flow identifier; or a logical channel identifier.

Optionally, in an embodiment of the present disclosure, the initiation mode of the non-connected state data transmission procedure includes at least one of: initiating the non-connected state data transmission procedure through a 4-step random access procedure; initiating the non-connected state data transmission procedure through a 2-step random access procedure; initiating the non-connected state data transmission procedure through a random access procedure; initiating the non-connected state data transmission procedure through Configured Grant (CG)-non-connected state data transmission; or initiating the non-connected state data transmission procedure through Semi-Persistent Scheduling (SPS)-non-connected state data transmission.

Optionally, in an embodiment of the present disclosure, the determining non-connected state data transmission configuration information includes at least one of: determining the non-connected state data transmission configuration information based on an agreement in a protocol; or obtaining the non-connected state data transmission configuration information sent by the network device.

Optionally, in an embodiment of the present disclosure, the obtaining the non-connected state data transmission configuration information sent by the network device includes at least one of: obtaining the non-connected state data transmission configuration information sent by the network device through a connection release message; or obtaining the non-connected state data transmission configuration information sent by the network device through system information.

Optionally, in an embodiment of the present disclosure, the triggering a non-connected state data transmission procedure to perform data transmission includes triggering the non-connected state data transmission procedure based on the initiation mode indicated in the indication information and/or the initiation mode indicated in the non-connected state data transmission configuration information, and using the first bearer for the non-connected state data transmission procedure.

Optionally, in an embodiment of the present disclosure, the data transmission method further includes, in a case that the non-connected state data transmission procedure is triggered, resuming a Radio Bearer (RB) for data transmission.

Optionally, in an embodiment of the present disclosure, the data transmission method further includes, in a case that the non-connected state data transmission procedure is triggered, resuming a Signaling Radio Bearer (SRB) for signaling transmission.

Optionally, in an embodiment of the present disclosure, the data transmission method further includes sending auxiliary information to the network device, and the auxiliary information is used to notify the network device of whether or not the non-connected state data transmission procedure is triggered by the UE. The auxiliary information includes at least one of: a seventh message for indicating whether or not a connection resume procedure is used for the non-connected state data transmission; an eighth message for indicating whether or not a connection setup procedure is used for the non-connected state data transmission; a ninth message for indicating whether or not a random access procedure is used for the non-connected state data transmission; or bearer indication information of a bearer for initiating the non-connected state data transmission procedure.

Optionally, in an embodiment of the present disclosure, the bearer indication information includes at least one of: a bearer type indicator; a bearer identifier; a session identifier; a data flow identifier; or a logical channel identifier.

Optionally, in an embodiment of the present disclosure, the sending auxiliary information to the network device includes at least one of: sending the auxiliary information to the network device through a Physical Random Access Channel (PRACH) resource; sending the auxiliary information to the network device through a connection resume message; or sending the auxiliary information to the network device through a connection setup message.

In a second aspect, the present disclosure provides in some embodiments a data transmission method for a network device, including: sending indication information to a UE, the indication information being used to indicate the UE in a non-connected state to perform data transmission; and performing data transmission based on a non-connected state data transmission procedure triggered by the UE.

Optionally, in an embodiment of the present disclosure, the sending indication information to a UE includes, in a case that a triggering condition is met, sending the indication information to the UE. The triggering condition includes at least one of: a condition where data needs to be sent to the UE supporting non-connected state data transmission; a condition where data needs to be sent to the UE configured with non-connected state data transmission; or a condition where data needs to be sent through a bearer corresponding to the UE and supporting non-connected state data transmission.

Optionally, in an embodiment of the present disclosure, the indication information includes at least one of: a first message for indicating the UE in the non-connected state to perform data reception; a second message for indicating the UE in the non-connected state to perform data reception through a first bearer; or a third message for indicating an initiation mode of the non-connected state data transmission procedure.

Optionally, in an embodiment of the present disclosure, the sending indication information to a UE includes any one of: sending the indication information to the UE through a short message; sending the indication information to the UE through a paging message; or sending the indication information to the UE through the short message and the paging message.

Optionally, in an embodiment of the present disclosure, the data transmission method further includes sending non-connected state data transmission configuration information to the UE.

Optionally, in an embodiment of the present disclosure, the non-connected state data transmission configuration information includes at least one of: a fourth message for indicating whether or not the UE in the non-connected state performs data reception; a fifth message for indicating whether or not the UE in the non-connected state performs data reception through a first bearer; or a sixth message for indicating an initiation mode of the non-connected state data transmission procedure.

Optionally, in an embodiment of the present disclosure, the first bearer includes at least one of: a bearer type indicator; a bearer identifier; a session identifier; a data flow identifier; or a logical channel identifier.

Optionally, in an embodiment of the present disclosure, the initiation mode of the non-connected state data transmission procedure includes at least one of: initiating the non-connected state data transmission procedure through a 4-step random access procedure; initiating the non-connected state data transmission procedure through a 2-step random access procedure; initiating the non-connected state data transmission procedure through a random access procedure; initiating the non-connected state data transmission procedure through CG-non-connected state data transmission; or initiating the non-connected state data transmission procedure through SPS-non-connected state data transmission.

Optionally, in an embodiment of the present disclosure, the sending non-connected state data transmission configuration information to the UE includes at least one of: sending the non-connected state data transmission configuration information to the UE through a connection release message; or sending the non-connected state data transmission configuration information to the UE through system information.

Optionally, in an embodiment of the present disclosure, the data transmission method further includes, in a case that the non-connected state data transmission procedure is triggered, resuming an RB for data transmission.

Optionally, in an embodiment of the present disclosure, the data transmission method further includes, in a case that the non-connected state data transmission procedure is triggered, resuming an SRB for signaling transmission.

Optionally, in an embodiment of the present disclosure, the data transmission method further includes obtaining auxiliary information sent by the UE, and the auxiliary information is used to notify the network device of whether or not the non-connected state data transmission procedure is triggered by the UE. The auxiliary information includes at least one of: a seventh message for indicating whether or not a connection resume procedure is used for the non-connected state data transmission; an eighth message for indicating whether or not a connection setup procedure is used for the non-connected state data transmission; a ninth message for indicating whether or not a random access procedure is used for the non-connected state data transmission; or bearer indication information of a bearer for initiating the non-connected state data transmission procedure.

Optionally, in an embodiment of the present disclosure, the bearer indication information includes at least one of: a bearer type indicator; a bearer identifier; a session identifier; a data flow identifier; or a logical channel identifier.

Optionally, in an embodiment of the present disclosure, the obtaining auxiliary information sent by the UE includes at least one of: obtaining the auxiliary information sent by the UE through a PRACH resource; obtaining the auxiliary information sent by the UE through a connection resume message; or obtaining the auxiliary information sent by the UE through a connection setup message.

Optionally, in an embodiment of the present disclosure, the signal processing device is a vehicle-mounted signal processing device.

In a third aspect, the present disclosure provides in some embodiments a data transmission apparatus, including: an obtaining module configured to obtain indication information sent by a network device, the indication information being used to indicate a UE in a non-connected state to perform data transmission; and a transmission module configured to trigger a non-connected state data transmission procedure to perform data transmission.

In a fourth aspect, the present disclosure provides in some embodiments a data transmission apparatus, including: a sending module configured to send indication information to a UE, the indication information being used to indicate the UE in a non-connected state to perform data transmission; and a transmission module configured to perform data transmission based on a non-connected state data transmission procedure triggered by the UE.

In a fifth aspect, the present disclosure provides in some embodiments a communication device, including a processor and a memory storing therein a computer program. The processor is configured to execute the computer program in the memory, so as to implement the above-mentioned method in the first aspect.

In a sixth aspect, the present disclosure provides in some embodiments a communication device, including a processor and a memory storing therein a computer program. The processor is configured to execute the computer program in the memory, so as to implement the above-mentioned method in the second aspect.

In a seventh aspect, the present disclosure provides in some embodiments a communication device, including a processor and an interface circuit. The interface circuit is configured to receive a code instruction and transmit the code instruction to the processor, and the processor is configured to execute the code instruction so as to implement the above-mentioned method in the first aspect.

In an eighth aspect, the present disclosure provides in some embodiments a communication device, including a processor and an interface circuit. The interface circuit is configured to receive a code instruction and transmit the code instruction to the processor, and the processor is configured to execute the code instruction so as to implement the above-mentioned method in the second aspect.

In a ninth aspect, the present disclosure provides in some embodiments a computer-readable storage medium storing therein an instruction. The instruction is executed to implement the above-mentioned method in the first aspect.

In a tenth aspect, the present disclosure provides in some embodiments a computer-readable storage medium storing therein an instruction. The instruction is executed to implement the above-mentioned method in the second aspect.

In a word, in the data transmission method, the apparatus, the device and the storage medium according to the embodiments of the present disclosure, the UE in the non-connected state obtains the indication information sent by the network device, and the indication information is used to indicate the UE in the non-connected state to perform data transmission. Then, the UE triggers the non-connected state data transmission procedure to perform data transmission. Hence, in an embodiment of the present disclosure, in a case that the UE in the non-connected state needs to perform data transmission, it directly triggers the non-connected state data transmission procedure to perform data transmission, without any necessity to perform a random access procedure so as to enter a connected state for the subsequent data transmission, so it is able to reduce a data transmission delay.

### BRIEF DESCRIPTION OF THE DRAWINGS

The above-mentioned and/or other aspects and advantages of the present disclosure may become apparent and easily understandable in the following description in conjunction with the drawings.
FIG. 1 is a flow chart of a data transmission method according to an embodiment of the present disclosure.
FIG. 2 is another flow chart of the data transmission method according to an embodiment of the present disclosure.
FIG. 3 is yet another flow chart of the data transmission method according to an embodiment of the present disclosure.
FIG. 4 is still yet another flow chart of the data transmission method according to an embodiment of the present disclosure.
FIG. 5 is still yet another flow chart of the data transmission method according to an embodiment of the present disclosure.
FIG. 6 is still yet another flow chart of the data transmission method according to an embodiment of the present disclosure.
FIG. 7 is a schematic view showing a data transmission apparatus according to an embodiment of the present disclosure.
FIG. 8 is another schematic view showing the data transmission apparatus according to an embodiment of the present disclosure.

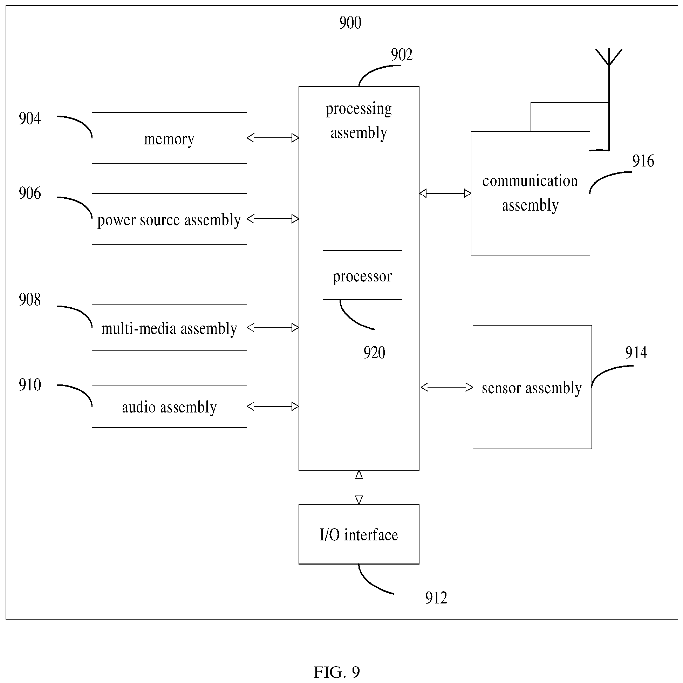

FIG. 9 is a block diagram of a UE according to an embodiment of the present disclosure.
FIG. 10 is a block diagram of a network side device according to an embodiment of the present disclosure.

### DETAILED DESCRIPTION

The present disclosure will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure as specified in the appended claims.

The terms used in embodiments of the present disclosure are for illustrative purposes only, but do not intend to limit the present disclosure. Such a singular form as "one" or "the" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of the same type from each other. For example, without departing from the scope of the present disclosure, first information may also be called as second information, and similarly second information may also be called as first information. Depending on the context, such a word as "if" may be construed as "when ...", "in the case that ..." or "in response to determining that ...".

A data transmission method, an apparatus, a device and a storage medium provided in the embodiments of the present disclosure will be described hereinafter in details with reference to the drawings.

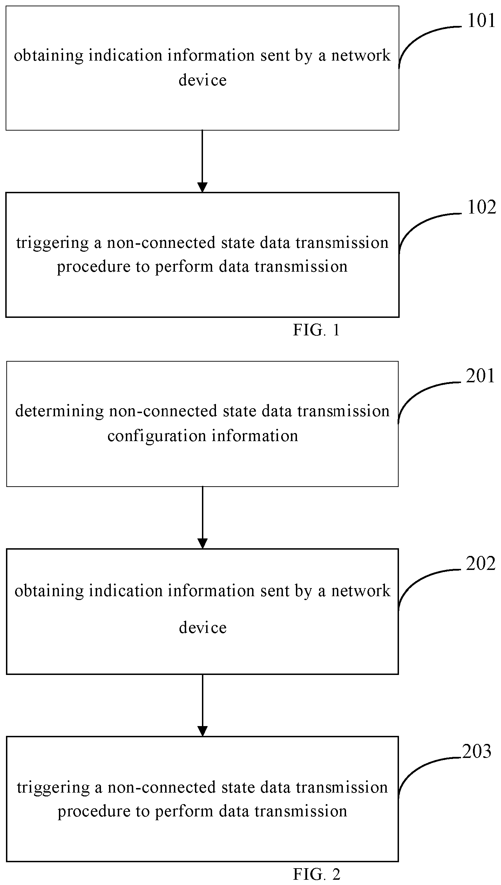

FIG. 1 is a flow chart of a data transmission method according to the embodiments of the present disclosure, and this method is executed by a UE in a non-connected state. As shown in FIG. 1, the data transmission method includes the following steps.

Step 101: indication information sent by a network device is obtained.

It should be appreciated that, in an embodiment of the present disclosure, the UE may be a terminal device or a network device. The UE may be a device for providing voice and/or data connectivity to a user. The UE may communicate with one or more core networks via a Radio Access Network (RAN). The UE may be an Internet of Things (IoT) terminal, e.g., a sensor device or a mobile phone (also called as cellular phone), or a computer having the IoT terminal, e.g., an immobile, portable, pocket-sized, handheld, built-in or vehicle-mounted device. For example, the UE may be a Station (STA), a subscriber unit, a subscriber station, a mobile station, a mobile, a remote station, an access point, a remote terminal, an access terminal, a user terminal or a user agent. The UE may also be a device for an unmanned aerial vehicle. The terminal device may also be a vehicle-mounted device, e.g., an electronic control unit having a wireless communication function, or a wireless terminal coupled to an external electronic control unit. Alternatively, the UE may also be a roadside device, e.g., a street lamp or a signal lamp having a wireless communication function, or any other roadside devices.

In an embodiment of the present disclosure, the indication information is used to indicate the UE in the non-connected state to perform data transmission. To be specific, the indication information is used to indicate the network device to send downlink data to the UE, i.e., the UE needs to perform downlink data reception.

To be specific, in an embodiment of the present disclosure, in a case that the network device has met a triggering condition, it means that the network device needs to send downlink data to the UE. At this time, the network device sends the indication information to the UE, so as to indicate the UE to perform data transmission.

In an embodiment of the present disclosure, the triggering condition for the indication information includes any one of: a condition where data needs to be sent to the UE supporting non-connected state data transmission; a condition where data needs to be sent to the UE configured with non-connected state data transmission; or a condition where data needs to be sent through a bearer corresponding to the UE and supporting non-connected state data transmission.

In an embodiment of the present disclosure, the non-connected state data transmission may be Small Data Transmission (SDT), e.g., the non-connected state data transmission may be Mobile Terminal-Small Data Transmission (MT-SDT).

Based on the above, in an embodiment of the present disclosure, in a case that data needs to be sent to the UE in the non-connected state which supports or is configured with the MT-SDT, the network device sends the indication information to the UE. In another embodiment of the present disclosure, in a case that a bearer currently configured for the UE includes a Data Radio Bearer (DRB)-1 and a DRB-2 and the network device needs to transmit data to the UE in the non-connected state on the DRB-1, the network device sends the indication information to the UE.

In an embodiment of the present disclosure, the indication information includes at least one of: a first message for indicating the UE in the non-connected state to perform data reception; a second message for indicating the UE in the non-connected state to perform data reception through a first bearer; or a third message for indicating an initiation mode of the non-connected state data transmission procedure.

In an embodiment of the present disclosure, the first bearer includes at least one of:
a bearer type indicator, e.g., at least one of an SRB, a DRB, a Master Cell Group (MCG) bearer, a Secondary Cell Group (SCG) bearer or a split bearer;
a bearer Identifier (ID), e.g., DRB-1;
a session ID, e.g., a Protocol Data Unit (PDU) session-1 ;
a data flow ID, e.g., a Quality of Service (QoS) flow-1; or
a logical channel ID.

In an embodiment of the present disclosure, the initiation mode of the non-connected state data transmission procedure includes at least one of:
initiating the non-connected state data transmission procedure through a 4-step random access procedure (i.e., 4-step RACH SDT);
initiating the non-connected state data transmission procedure through a 2-step random access procedure (i.e., 2-step RACH SDT);
initiating the non-connected state data transmission procedure through a random access procedure;
initiating the non-connected state data transmission procedure through CG-non-connected state data transmission (i.e., CG-SDT); or
initiating the non-connected state data transmission procedure through SPS-non-connected state data transmission (i.e., SPS-SDT, through which a downlink SPS resource is configured by the network device for the UE).

Further, in an embodiment of the present disclosure, the obtaining the indication information sent by the network device may include any one of the following methods.

First method: the indication information sent by the network device through a short message is obtained.

In an embodiment of the present disclosure, the indication information sent through the short message may be an indication code, which has N bits, where N is a positive integer. In a case that the indication code has a first numerical value, it is used to indicate the UE in the non-connected state to perform data transmission.

For example, in an embodiment of the present disclosure, the indication code has 1 bit, and in a case that the indication code is 1, it is used to indicate the UE in the non-connected state to perform data transmission.

Second method: the indication information sent by the network device through a paging message is obtained.

In an embodiment of the present disclosure, the paging message may include the indication information, and the indication information may be a UE Identifier (ID) and/or a bearer ID. The UE ID may be a UE ID corresponding to the UE in the non-connected state which needs to perform data transmission. To be specific, the UE ID may be a 5th-Generation (5G) UE ID and/or an access network paging ID. The 5G UE ID may be an ng-5G-System Architecture Evolution-Temporary Mobile Subscriber Identifier (ng-5G-S-TMSI), and the access network paging ID may be a full-Radio Network Temporary Identifier (RNTI). The bearer ID may be used to indicate a bearer through which the UE in the non-connected state needs to perform data transmission. The bearer ID includes at least one of: a bearer type indicator; a bearer ID; a session ID; a data flow ID; or a logical channel ID.

The detailed description about the bearer ID may refer to that mentioned hereinabove, and thus will not be particularly defined here.

Third method: the indication information sent by the network device through the short message and the paging message is obtained.

Fourth method: the indication information sent by the network device through a Radio Resource Control (RRC) message (e.g., an RRC release message) is obtained.

Step 102: a non-connected state data transmission procedure is triggered to perform data transmission.

In an embodiment of the present disclosure, the non-connected state data transmission procedure is triggered based on the indication information sent by the network device, so as to perform data transmission.

To be specific, after the UE has received the indication information sent by the network device, the non-connected state data transmission procedure is initiated based on an initiation mode indicated in the third message included in the indication information, and the first bearer indicated in the second message is used for the non-connected state data transmission procedure. In an embodiment of the present disclosure, in a case that the non-connected state data transmission procedure is triggered, a Radio Bearer (RB) for data transmission is resumed, and/or an SRB for data transmission is resumed, so that data transmission is performed between the UE and the network device subsequently based on the RB and/or the SRB.

For example, in an embodiment of the present disclosure, the UE may resume SRB1, and sends an RRC connection resume request message through the SRB1 or sends an RRC connection setup request message to trigger the non-connected state data transmission procedure, so as to perform data transmission.

In a word, in the data transmission method according to the embodiments of the present disclosure, the UE in the non-connected state obtains the indication information sent by the network device, and the indication information is used to indicate the UE in the non-connected state to perform data transmission. Then, the UE triggers the non-connected state data transmission procedure to perform data transmission. Hence, in an embodiment of the present disclosure, in a case that the UE in the non-connected state needs to perform data transmission, it directly triggers the non-connected state data transmission procedure to perform data transmission, without any necessity to perform a random access procedure so as to enter a connected state for the subsequent data transmission, so it is able to reduce a data transmission delay.

FIG. 2 is a flow chart of a data transmission method according to the embodiments of the present disclosure, and this method is executed by a UE in a non-connected state. As shown in FIG. 2, the data transmission method includes the following steps.

Step 201: non-connected state data transmission configuration information is determined.

In an embodiment of the present disclosure, the non-connected state data transmission configuration information includes at least one of the followings.

A fourth message for indicating whether or not the UE in the non-connected state performs data reception. The fourth message may be an indication code having N bits, where N is a positive integer. In a case that the indication code in the fourth message has a first numerical value, it indicates the UE in the non-connected state to perform data reception. In a case that the indication code in the fourth message has a second numerical value, it indicates the UE in the non-connected state not to perform data reception. For example, in an embodiment of the present disclosure, the indication code in the fourth message has 1 bit. In a case that the 1-bit indication code is 0, it indicates the UE in the non-connected state not to perform data reception. In a case that the 1-bit indication code is 1, it indicates the UE in the non-connected state to perform data reception.

A fifth message for indicating whether or not the UE in the non-connected state performs data reception through a first bearer. The fifth message may be an indicator code having N bits, where N is a positive integer. In a case that the indication code in the fifth message has a first numerical value, it indicates the UE in the non-connected state to perform data reception through the first bearer. In a case that the indication code in the fifth message has a second numerical value, it indicates the UE in the non-connected state not to perform data reception through the first bearer. For example, in an embodiment of the present disclosure, the indication code in the fifth message has 1 bit. In a case that the 1-bit indication code is 0, it indicates the UE in the non-connected state not to perform data reception through the first bearer. In a case that the 1-bit indication code is 1, it indicates the UE in the non-connected state to perform data reception through the first bearer.

A sixth message for indicating an initiation mode of a non-connected state data transmission procedure.

The detailed description about the first bearer and the initiation mode may refer to that mentioned hereinabove, and thus will not be particularly defined herein.

In an embodiment of the present disclosure, the determining the non-connected state data transmission configuration information includes at least one of:
determining the non-connected state data transmission configuration information based on an agreement in a protocol; or
obtaining the non-connected state data transmission configuration information sent by the network device.

Further, in an embodiment of the present disclosure, the obtaining the non-connected state data transmission configuration information sent by the network device includes at least one of:
obtaining the non-connected state data transmission configuration information sent by the network device through a connection release message; or
obtaining the non-connected state data transmission configuration information sent by the network device through system information.

Step 202: indication information sent by the network device is obtained.

The relevant description about the indication information may refer to that mentioned hereinabove, and thus will not be particularly defined herein.

Step 203: a non-connected state data transmission procedure is triggered to perform data transmission.

It should be appreciated that, in an embodiment of the present disclosure, based on Step 201, specifically in a case that the fourth message in the non-connected state data transmission configuration information indicates the UE in the non-connected state to perform data reception and/or the fifth message in the non-connected state data transmission configuration information indicates the UE in the non-connected state to perform data reception through the first bearer, the non-connected state data transmission procedure is triggered if the UE has received the indication information, so as to perform data transmission.

In an embodiment of the present disclosure, the triggering the non-connected state data transmission procedure to perform data transmission includes triggering, by the UE, the non-connected state data transmission procedure based on the indication information and/or the non-connected state data transmission configuration information. To be specific, in an embodiment of the present disclosure, the UE triggers the non-connected state data transmission procedure based on an initiation mode indicated in the indication information and/or an initiation mode indicated in the non-connected state data transmission configuration information, and uses the first bearer indicated in the indication information and/or the first bearer indicated in the non-connected state data transmission configuration information for the non-connected state data transmission procedure.

For example, in an embodiment of the present disclosure, presumed that the fifth message in the non-connected state data transmission configuration information determined by the UE indicates the UE in the non-connected state to perform data reception through the first bearer DRB-1 and the UE has obtained the indication information for indicating the UE in the non-connected state to perform data transmission, the UE initiates connection setup to the network device, transmits data through MT-SDT, and resumes the DRB-1 for the MT-SDT procedure.

For example, in an embodiment of the present disclosure, presumed that an initiation mode of the non-connected state data transmission procedure indicated in the non-connected state data transmission configuration information determined by the UE or the indication information obtained by the UE includes initiating the non-connected state data transmission procedure through a 4-step random access procedure, the UE may initiates the 4-step random access procedure to the network device, and transmits data through MT-SDT in the 4-step random access procedure.

It should be appreciated that, in the embodiments of the present disclosure, Steps 201 and 202 may be performed simultaneously, or Step 201 is performed prior to Step 202, or Step 202 is performed prior to Step 201.

In a word, in the data transmission method according to the embodiments of the present disclosure, the UE in the non-connected state obtains the indication information sent by the network device, and the indication information is used to indicate the UE in the non-connected state to perform data transmission. Then, the UE triggers the non-connected state data transmission procedure to perform data transmission. Hence, in an embodiment of the present disclosure, in a case that the UE in the non-connected state needs to perform data transmission, it directly triggers the non-connected state data transmission procedure to perform data transmission, without any necessity to perform a random access procedure so as to enter a connected state for the subsequent data transmission, so it is able to reduce a data transmission delay.

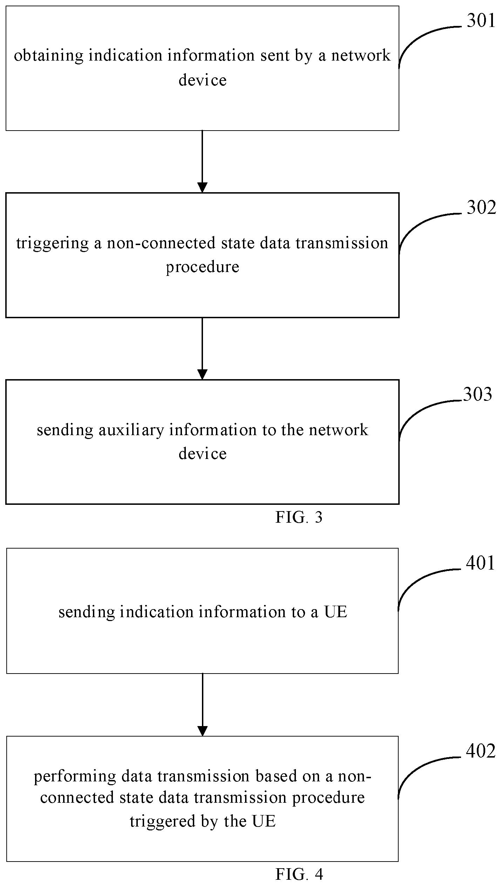

FIG. 3 is a flow chart of a data transmission method according to the embodiments of the present disclosure, and this method is executed by a UE in a non-connected state. As shown in FIG. 3, the data transmission method includes the following steps.

Step 301: indication information sent by a network device is obtained.

Step 302: a non-connected state data transmission procedure is triggered.

Step 303: auxiliary information is sent to the network device.

In an embodiment of the present disclosure, the auxiliary information is used to notify the network device of whether or not the UE in the non-connected state has triggered the non-connected state data transmission procedure.

To be specific, in an embodiment of the present disclosure, based on the above-mentioned contents, the network device sends the indication information to the UE only in a case that the network device needs to send downlink data to the UE. Hence, after the UE has triggered the non-connected state data transmission procedure based on the indication information, the UE further needs to send the auxiliary information to the network device, so that the network device determines whether or not the UE has triggered the non-connected state data transmission procedure based on the auxiliary information. In a case that the network device determines that the UE has triggered the non-connected state data transmission procedure, the network device starts to transmit the to-be-transmitted downlink data to the UE. Otherwise, the network device does not transmit the to-be-transmitted downlink data to the UE.

Further, in an embodiment of the present disclosure, the auxiliary information includes at least one of: a seventh message for indicating whether or not a connection resume procedure is used for the non-connected state data transmission; an eighth message for indicating whether or not a connection setup procedure is used for the non-connected state data transmission; a ninth message for indicating whether or not a random access procedure is used for the non-connected state data transmission; or bearer indication information of a bearer for initiating the non-connected state data transmission procedure.

In an embodiment of the present disclosure, the bearer indication information includes at least one of: a bearer type indicator; a bearer ID; a session ID; a data flow ID; or a logical channel ID.

It should be appreciated that, in an embodiment of the present disclosure, the bearer indicated in the bearer indication information may include one or more of the first bearers, and in another embodiment of the present disclosure, the bearer indicated in the bearer indication information may not be included in the first bearers.

To be specific, in an embodiment of the present disclosure, in a case that in Step 302 the UE triggers the non-connected state data transmission procedure through the connection resume procedure, the auxiliary information sent by the UE to the network device in Step 303 includes the seventh message for indicating whether or not the connection resume procedure is used for the non-connected state data transmission.

Further, in an embodiment of the present disclosure, the sending the auxiliary information to the network device includes at least one of the following methods.

Method a: the auxiliary information is sent to the network device through a PRACH resource.

The PRACH resource includes a PRACH time/frequency resource and/or a preamble. Based on this, in an embodiment of the present disclosure, the UE in the non-connected state sends the auxiliary information to the network device through the PRACH time/frequency resource and/or the preamble.

Method b: the auxiliary information is sent to the network device through a connection resume message.

In an embodiment of the present disclosure, a method for sending the auxiliary information to the network device through the connection resume message may include enabling the connection resume message sent by the UE to the network device to include ResumeCause, and the ResumeCause is used to trigger the non-connected state data transmission.

Method c: the auxiliary information is sent to the network device through a connection setup message.

In an embodiment of the present disclosure, a method for sending the auxiliary information to the network device through the connection setup message may include: enabling the connection setup message sent by the UE to the network device to include Cause, and the Cause is used to trigger the non-connected state data transmission.

It should be appreciated that, in the embodiments of the present disclosure, Steps 302 and 303 may be performed simultaneously, or Step 302 is performed prior to Step 303, or Step 303 is performed prior to Step 302.

In a word, in the data transmission method according to the embodiments of the present disclosure, the UE in the non-connected state obtains the indication information sent by the network device, and the indication information is used to indicate the UE in the non-connected state to perform data transmission. Then, the UE triggers the non-connected state data transmission procedure to perform data transmission. Hence, in an embodiment of the present disclosure, in a case that the UE in the non-connected state needs to perform data transmission, it directly triggers the non-connected state data transmission procedure to perform data transmission, without any necessity to perform a random access procedure so as to enter a connected state for the subsequent data transmission, so it is able to reduce a data transmission delay.

FIG. 4 is a flow chart of a data transmission method according to the embodiments of the present disclosure, and this method is executed by a network device. As shown in FIG. 4, the data transmission method includes the following steps.

Step 401: indication information is sent to a UE.

In an embodiment of the present disclosure, the indication information is used to indicate the UE in a non-connected state to perform data transmission.

In an embodiment of the present disclosure, the sending the indication information to the UE includes, in a case that a triggering condition is met, sending the indication information to the UE.

In an embodiment of the present disclosure, the triggering condition includes at least one of: a condition where data needs to be sent to the UE supporting non-connected state data transmission; a condition where data needs to be sent to the UE configured with non-connected state data transmission; or a condition where data needs to be sent through a bearer corresponding to the UE and supporting non-connected state data transmission.

In an embodiment of the present disclosure, the indication information includes at least one of: a first message for indicating the UE in the non-connected state to perform data reception; a second message for indicating the UE in the non-connected state to perform data reception through a first bearer; or a third message for indicating an initiation mode of the non-connected state data transmission procedure.

Further, in an embodiment of the present disclosure, the sending the indication information to the UE includes any one of the following methods.

Method 1: the indication information is sent to the UE through a short message.

Method 2: the indication information is sent to the UE through a paging message.

Method 3: the indication information is sent to the UE through the short message and the paging message.

Step 402: data transmission is performed based on a non-connected state data transmission procedure triggered by the UE.

In an embodiment of the present disclosure, an initiation mode of the non-connected state data transmission procedure includes at least one of: initiating the non-connected state data transmission procedure through a 4-step random access procedure; initiating the non-connected state data transmission procedure through a 2-step random access procedure; initiating the non-connected state data transmission procedure through a random access procedure; initiating the non-connected state data transmission procedure through CG-non-connected state data transmission; or initiating the non-connected state data transmission procedure through SPS-non-connected state data transmission.

In an embodiment of the present disclosure, in a case that the non-connected state data transmission procedure is triggered, an RB for data transmission is resumed, and in an embodiment of the present disclosure, in a case that the non-connected state data transmission procedure is triggered, an SRB for data transmission is resumed.

The detailed description about Steps 401 to 403 may refer to that mentioned hereinabove, and thus will not be particularly defined herein.

In a word, in the data transmission method according to the embodiments of the present disclosure, the UE in the non-connected state obtains the indication information sent by the network device, and the indication information is used to indicate the UE in the non-connected state to perform data transmission. Then, the UE triggers the non-connected state data transmission procedure to perform data transmission. Hence, in an embodiment of the present disclosure, in a case that the UE in the non-connected state needs to perform data transmission, it directly triggers the non-connected state data transmission procedure to perform data transmission, without any necessity to perform a random access procedure so as to enter a connected state for the subsequent data transmission, so it is able to reduce a data transmission delay.

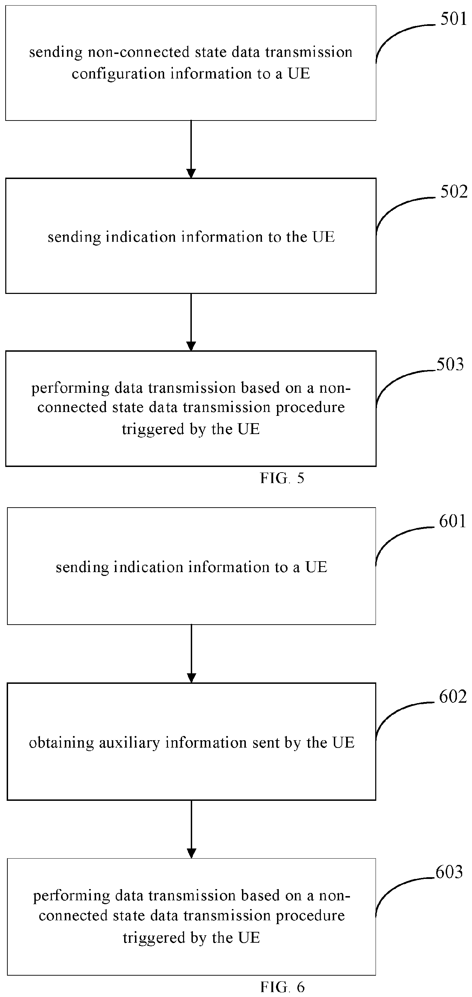

FIG. 5 is a flow chart of a data transmission method according to the embodiments of the present disclosure, and this method is executed by a network device. As shown in FIG. 5, the data transmission method includes the following steps.

Step 501: non-connected state data transmission configuration information is sent to a UE.

In an embodiment of the present disclosure, the non-connected state data transmission configuration information includes at least one of:
a fourth message for indicating whether or not the UE in a non-connected state performs data reception;
a fifth message for indicating whether or not the UE in the non-connected state performs data reception through a first bearer; or
a sixth message for indicating an initiation mode of a non-connected state data transmission procedure.
In an embodiment of the present disclosure, the first bearer includes at least one of: a bearer type indicator; a bearer ID; a session ID; a data flow ID; or a logical channel ID.

Further, in an embodiment of the present disclosure, the sending the non-connected state data transmission configuration information to the UE includes at least one of the following methods.

Method 1: the non-connected state data transmission configuration information is sent to the UE through a connection release message.

Method 2: the non-connected state data transmission configuration information is sent to the UE through system information.

Step 502: indication information is sent to the UE.

Step 503: data transmission is performed based on the non-connected state data transmission procedure triggered by the UE.

The detailed description about Steps 501 to 503 may refer to that mentioned hereinabove, and thus will not be particularly defined herein.

It should be appreciated that, in the embodiments of the present disclosure, Steps 501 and 502 may be performed simultaneously, or Step 502 is performed prior to Step 501, or Step 501 is performed prior to Step 502.

In a word, in the data transmission method according to the embodiments of the present disclosure, the UE in the non-connected state obtains the indication information sent by the network device, and the indication information is used to indicate the UE in the non-connected state to perform data transmission. Then, the UE triggers the non-connected state data transmission procedure to perform data transmission. Hence, in an embodiment of the present disclosure, in a case that the UE in the non-connected state needs to perform data transmission, it directly triggers the non-connected state data transmission procedure to perform data transmission, without any necessity to perform a random access procedure so as to enter a connected state for the subsequent data transmission, so it is able to reduce a data transmission delay.

FIG. 6 is a flow chart of a data transmission method according to the embodiments of the present disclosure, and this method is executed by a network device. As shown in FIG. 6, the data transmission method includes the following steps.

Step 601: indication information is sent to a UE.

Step 602: auxiliary information sent by the UE is obtained.

In an embodiment of the present disclosure, the auxiliary information is used to notify the network device of whether or not the EU has triggered a non-connected state data transmission procedure.

In an embodiment of the present disclosure, the auxiliary information includes at least one of: a seventh message for indicating whether or not a connection resume procedure is used for non-connected state data transmission; an eighth message for indicating whether or not a connection setup procedure is used for the non-connected state data transmission; a ninth message for indicating whether or not a random access procedure is used for the non-connected state data transmission; or bearer indication information of a bearer for initiating the non-connected state data transmission procedure.

In an embodiment of the present disclosure, the bearer indication information includes at least one of: a bearer type indicator; a bearer ID; a session ID; a data flow ID; or a logical channel ID.

Further, in an embodiment of the present disclosure, the obtaining the auxiliary information sent by the UE includes at least one of the following methods.

Method a: the auxiliary information sent by the UE through a PRACH resource is obtained.

Method b: the auxiliary information sent by the UE through a connection resume message is obtained.

Method c: the auxiliary information sent by the UE through a connection setup message is obtained.

Step 603: data transmission is performed based on the non-connected state data transmission procedure triggered by the UE.

The detailed description about Steps 601 to 603 may refer to that mentioned hereinabove, and thus will not be particularly defined herein.

It should be appreciated that, in the embodiments of the present disclosure, Steps 602 and 603 may be performed simultaneously, or Step 602 may be performed prior to Step 603, or Step 603 may be performed prior to Step 602.

In a word, in the data transmission method according to the embodiments of the present disclosure, the UE in the non-connected state obtains the indication information sent by the network device, and the indication information is used to indicate the UE in the non-connected state to perform data transmission. Then, the UE triggers the non-connected state data transmission procedure to perform data transmission. Hence, in an embodiment of the present disclosure, in a case that the UE in the non-connected state needs to perform data transmission, it directly triggers the non-connected state data transmission procedure to perform data transmission, without any necessity to perform a random access procedure so as to enter a connected state for the subsequent data transmission, so it is able to reduce a data transmission delay.

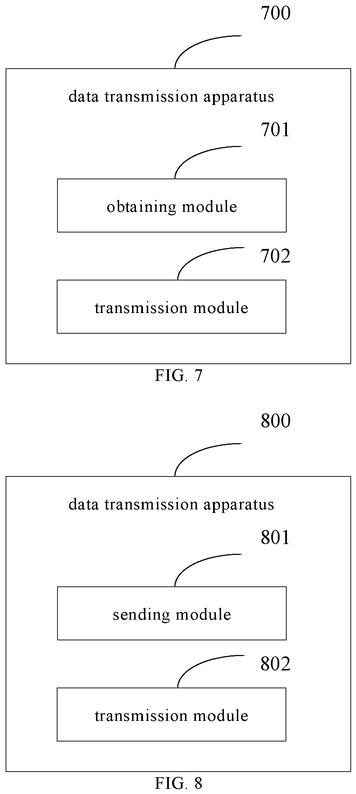

FIG. 7 is a schematic view showing a data transmission apparatus according to the embodiments of the present disclosure. As shown in FIG. 7, the data transmission apparatus includes an obtaining module and a transmission module.

The obtaining module is configured to obtain indication information sent by a network device, and the indication information is used to indicate a UE in a non-connected state to perform data transmission.

The transmission module is configured to trigger a non-connected state data transmission procedure to perform data transmission.

In a word, in the data transmission apparatus according to the embodiments of the present disclosure, the UE in the non-connected state obtains the indication information sent by the network device, and the indication information is used to indicate the UE in the non-connected state to perform data transmission. Then, the UE triggers the non-connected state data transmission procedure to perform data transmission. Hence, in an embodiment of the present disclosure, in a case that the UE in the non-connected state needs to perform data transmission, it directly triggers the non-connected state data transmission procedure to perform data transmission, without any necessity to perform a random access procedure so as to enter a connected state for the subsequent data transmission, so it is able to reduce a data transmission delay.

Optionally, in an embodiment of the present disclosure, the indication information includes at least one of: a first message for indicating the UE in the non-connected state to perform data reception; a second message for indicating the UE in the non-connected state to perform data reception through a first bearer; or a third message for indicating an initiation mode of the non-connected state data transmission procedure.

Optionally, in an embodiment of the present disclosure, the obtaining module is further configured to: obtain the indication information sent by the network device through a short message; and/or obtain the indication information sent by the network device through a paging message; and/or obtain the indication information sent by the network device through the short message and the paging message.

Optionally, in an embodiment of the present disclosure, the data transmission apparatus is further configured to determine non-connected state data transmission configuration information.

Optionally, in an embodiment of the present disclosure, the non-connected state data transmission configuration information includes at least one of: a fourth message for indicating whether or not the UE in the non-connected state performs data reception; a fifth message for indicating whether or not the UE in the non-connected state performs data reception through a first bearer; or a sixth message for indicating an initiation mode of the non-connected state data transmission procedure.

Optionally, in an embodiment of the present disclosure, the first bearer includes at least one of: a bearer type indicator; a bearer ID; a session ID; a data flow ID; or a logical channel ID.

Optionally, in an embodiment of the present disclosure, the initiation mode of the non-connected state data transmission procedure includes at least one of: initiating the non-connected state data transmission procedure through a 4-step random access procedure; initiating the non-connected state data transmission procedure through a 2-step random access procedure; initiating the non-connected state data transmission procedure through a random access procedure; initiating the non-connected state data transmission procedure through CG-non-connected state data transmission; or initiating the non-connected state data transmission procedure through SPS-non-connected state data transmission.

Optionally, in an embodiment of the present disclosure, the data transmission apparatus is further configured to: determine the non-connected state data transmission configuration information based on an agreement in a protocol; and obtain the non-connected state data transmission configuration information sent by the network device.

Optionally, in an embodiment of the present disclosure, the data transmission apparatus is further configured to: obtain the non-connected state data transmission configuration information sent by the network device through a connection release message; and/or obtain the non-connected state data transmission configuration information sent by the network device through system information.

Optionally, in an embodiment of the present disclosure, the transmission module is further configured to trigger the non-connected state data transmission procedure based on the initiation mode indicated in the indication information and/or the initiation mode indicated in the non-connected state data transmission configuration information, and use the first bearer for the non-connected state data transmission procedure.

Optionally, in an embodiment of the present disclosure, the data transmission apparatus is further configured to, in a case that the non-connected state data transmission procedure is triggered, resuming an RB for data transmission.

Optionally, in an embodiment of the present disclosure, the data transmission apparatus is further configured to, in a case that the non-connected state data transmission procedure is triggered, resuming an SRB for signaling transmission.

Optionally, in an embodiment of the present disclosure, the data transmission apparatus is further configured to send auxiliary information to the network device, and the auxiliary information is used to notify the network device of whether or not the non-connected state data transmission procedure is triggered by the UE. The auxiliary information includes at least one of: a seventh message for indicating whether or not a connection resume procedure is used for the non-connected state data transmission; an eighth message for indicating whether or not a connection setup procedure is used for the non-connected state data transmission; a ninth message for indicating whether or not a random access procedure is used for the non-connected state data transmission; or bearer indication information of a bearer for initiating the non-connected state data transmission procedure.

Optionally, in an embodiment of the present disclosure, the bearer indication information includes at least one of: a bearer type indicator; a bearer ID; a session ID; a data flow ID; or a logical channel ID.

Optionally, in an embodiment of the present disclosure, the data transmission apparatus is further configured to: send the auxiliary information to the network device through a PRACH resource; and/or send the auxiliary information to the network device through a connection resume message; and/or send the auxiliary information to the network device through a connection setup message.

FIG. 8 is a schematic view showing a data transmission apparatus. As shown in FIG. 8, the data transmission apparatus includes a sending module and a transmission module.

The sending module is configured to send indication information to a UE, and the indication information is used to indicate the UE in a non-connected state to perform data transmission.

The transmission module is configured to perform data transmission based on a non-connected state data transmission procedure triggered by the UE.

In a word, in the data transmission apparatus according to the embodiments of the present disclosure, the UE in the non-connected state obtains the indication information sent by the network device, and the indication information is used to indicate the UE in the non-connected state to perform data transmission. Then, the UE triggers the non-connected state data transmission procedure to perform data transmission. Hence, in an embodiment of the present disclosure, the UE in the non-connected state can trigger a non-connected state data transmission process to transmit data based on the indication information sent by the network side device. In other words, the present disclosure provides a processing method for the situation that "the UE directly receives the downlink data in the non-connected state", and the UE in the non-connected state can adopt the method of the present disclosure to ensure the normal reception of the downlink data, thereby reducing the delay of data transmission.

Optionally, in an embodiment of the present disclosure, the sending module is further configured to, in a case that a triggering condition is met, send the indication information to the UE. The triggering condition includes at least one of: a condition where data needs to be sent to the UE supporting non-connected state data transmission; a condition where data needs to be sent to the UE configured with non-connected state data transmission; or a condition where data needs to be sent through a bearer corresponding to the UE and supporting non-connected state data transmission.

Optionally, in an embodiment of the present disclosure, the indication information includes at least one of: a first message for indicating the UE in the non-connected state to perform data reception; a second message for indicating the UE in the non-connected state to perform data reception through a first bearer; or a third message for indicating an initiation mode of the non-connected state data transmission procedure.

Optionally, in an embodiment of the present disclosure, the sending module is further configured to: send the indication information to the UE through a short message; and/or send the indication information to the UE through a paging message; and/or send the indication information to the UE through the short message and the paging message.

Optionally, in an embodiment of the present disclosure, the data transmission apparatus is further configured to send non-connected state data transmission configuration information to the UE.

Optionally, in an embodiment of the present disclosure, the non-connected state data transmission configuration information includes at least one of: a fourth message for indicating whether or not the UE in the non-connected state performs data reception; a fifth message for indicating whether or not the UE in the non-connected state performs data reception through a first bearer; or a sixth message for indicating an initiation mode of the non-connected state data transmission procedure.

Optionally, in an embodiment of the present disclosure, the first bearer includes at least one of: a bearer type indicator; a bearer ID; a session ID; a data flow ID; or a logical channel ID.

Optionally, in an embodiment of the present disclosure, the initiation mode of the non-connected state data transmission procedure includes at least one of: initiating the non-connected state data transmission procedure through a 4-step random access procedure; initiating the non-connected state data transmission procedure through a 2-step random access procedure; initiating the non-connected state data transmission procedure through a random access procedure; initiating the non-connected state data transmission procedure through CG-non-connected state data transmission; or initiating the non-connected state data transmission procedure through SPS-non-connected state data transmission.

Optionally, in an embodiment of the present disclosure, the data transmission apparatus is further configured to: send the non-connected state data transmission configuration information to the UE through a connection release message; and/or send the non-connected state data transmission configuration information to the UE through system information.

Optionally, in an embodiment of the present disclosure, the data transmission apparatus is further configured to, in a case that the non-connected state data transmission procedure is triggered, resume an RB for data transmission.

Optionally, in an embodiment of the present disclosure, the data transmission apparatus is further configured to, in a case that the non-connected state data transmission procedure is triggered, resume an SRB for signaling transmission.

Optionally, in an embodiment of the present disclosure, the data transmission apparatus is further configured to obtain auxiliary information sent by the UE, and the auxiliary information is used to notify the network device of whether or not the non-connected state data transmission procedure is triggered by the UE. The auxiliary information includes at least one of: a seventh message for indicating whether or not a connection resume procedure is used for the non-connected state data transmission; an eighth message for indicating whether or not a connection setup procedure is used for the non-connected state data transmission; a ninth message for indicating whether or not a random access procedure is used for the non-connected state data transmission; or bearer indication information of a bearer for initiating the non-connected state data transmission procedure.

Optionally, in an embodiment of the present disclosure, the bearer indication information includes at least one of: a bearer type indicator; a bearer ID; a session ID; a data flow ID; or a logical channel ID.

Optionally, in an embodiment of the present disclosure, the data transmission apparatus is further configured to: obtain the auxiliary information sent by the UE through a PRACH resource; and/or obtain the auxiliary information sent by the UE through a connection resume message; and/or obtain the auxiliary information sent by the UE through a connection setup message.

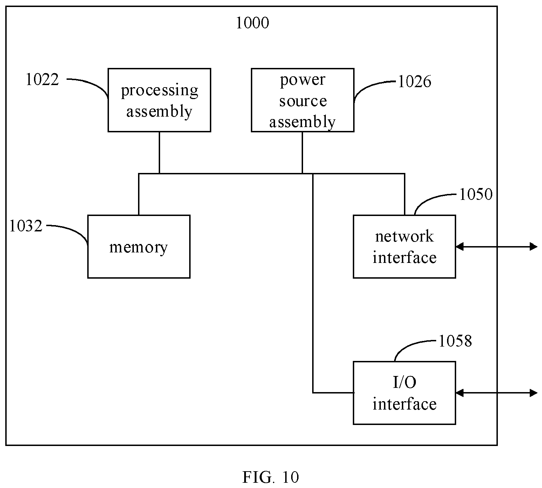

FIG. 10 is a block diagram of a UE 1000 according to the embodiments of the present disclosure. For example, the UE 1000 is a mobile phone, a computer, a digital broadcasting terminal device, a message transceiver device, a game console, a flat-panel device, medical equipment, fitness equipment, or a personal digital assistant.

As shown in FIG. 10, the UE 1000 includes at least one assembly selected from the group consisting of a processing assembly 1002, a memory 1004, a power source assembly 1006, a multi-media assembly 1008, an audio assembly 1010, an Input/Output (I/O) interface 1012, a sensor assembly 1013, and a communication assembly 1016.

Generally, the processing assembly 1002 controls an entire operation of the UE 1000, e.g., operations associated with display, phone call, data communication, camera operation and recording operation. The processing assembly 1002 includes at least one processor 1020 to execute an instruction, so as to implement all of, or a part of, the steps of the above-mentioned method. In addition, the processing assembly 1002 includes at least one module for the interaction between the processing assembly 1002 and the other assembly. For example, the processing assembly 1002 includes a multi-media module for the interaction between the multi-media assembly 1008 and the processing assembly 1002.

The memory 1004 is configured to store therein various types of data to support the operation of the UE 1000. Examples of such data include instructions for any application or method operated on the UE 1000, contact data, phonebook data, messages, pictures, video, etc. The memory 1004 may be implemented in the form of any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source assembly 1006 provides power to various assemblies of the UE 1000. The power source assembly 1006 may include a power management system, one or more power sources, and any other assemblies associated with the generation, management and distribution of power in the UE 1000.

The multi-media assembly 1008 includes a screen for providing an output interface between the UE 1000 and a user. In some embodiments of the present disclosure, the screen may include a Liquid Crystal Display (LCD) and a Touch Panel (TP). When the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media assembly 1008 includes a front-facing camera and/or a rear-facing camera. When the UE 1000 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio assembly 1010 is configured to output and/or input audio signals. For example, the audio assembly 1010 includes a microphone (MIC) configured to receive an external audio signal when the UE 1000 is in an operating mode, such as a call mode, a recording mode, and a voice recognition mode. The received audio signal may be further stored in the memory 1004 or transmitted via the communication assembly 1016. In some embodiments of the present disclosure, the audio assembly 1010 further includes a speaker to output audio signals.

The I/O interface 1012 provides an interface between the processing assembly 1002 and peripheral interface modules, such as a keyboard, a click wheel, buttons, and the like. The buttons may include, but not limited to, a home button, a volume button, a starting button, and a locking button.

The sensor assembly 1013 includes one or more sensors to provide status assessments about various aspects of the UE 1000. For example, the sensor assembly 1013 may detect an open/closed status of the UE 1000, relative positioning of assemblies, e.g., the display and the keypad, of the UE 1000, a change in a position of the UE 1000 or an assembly of the UE 1000, a presence or absence of user contact with the UE 1000, an orientation or an acceleration/deceleration of the UE 1000, and a change in a temperature of the UE 1000. The sensor assembly 1013 may include a proximity sensor configured to detect the presence of nearby objects without any physical contact. The sensor assembly 1013 may also include a light sensor, such as a Complementary Metal Oxide Semiconductor (CMOS) or Charge-Coupled Device (CCD) image sensor, for use in imaging applications. In some embodiments of the present disclosure, the sensor assembly 1013 may also include an accelerometer sensor, a gyroscope sensor, a magnetic sensor, a pressure sensor, or a temperature sensor.

The communication assembly 1016 is configured to facilitate wired or wireless communication between the UE 1000 and other devices. The UE 1000 may access a wireless network based on a communication standard, such as Wi-Fi, 2G or 3G, or a combination thereof. In an exemplary embodiment of the present disclosure, the communication assembly 1016 receives a broadcast signal or broadcast associated information from an external broadcast management system via a broadcast channel. In an exemplary embodiment of the present disclosure, the communication assembly 1016 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In an exemplary embodiment of the present disclosure, the UE 1000 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-mentioned method.

FIG. 11 is a block diagram of a network side device 1100 according to the embodiments of the present disclosure. For example, the network side device 1100 is provided as a network side device. As shown in FIG. 11, the network side device 1100 includes a processing assembly 1111, which further includes at least one processor and memory resources represented by a memory 1132 for storing therein instructions to be executed by the processing assembly 1122, e.g., applications. The applications stored in the memory 1132 may include one or more modules each corresponding to one group of instructions. In addition, the processing assembly 1110 is configured to execute the instructions, so as to implement any method for the network side device, e.g., the method in FIG. 1.

The network side device 1100 further includes a power source assembly 1126 configured to performed power management over the network side device 1100, a wired or wireless network interface 1150 configured to couple the network side device 1100 to a network, and an Input/Output (I/O) interface 1158. The network side device 1100 may be based on an operating system stored in the memory 1132, e.g., Windows Server TM, Mac OS XTM, Unix TM, Linux TM, Free BSDTM, or the like.

In the above-mentioned embodiments of the present disclosure, the methods have been described from the perspectives of the network side device and the UE. In order to achieve various functions in the embodiments of the present disclosure, each of the network side device and the UE includes a hardware structure and a software module, i.e., the functions are achieved in the form of the hardware structure, the software module, or the combination thereof. A certain function in these functions is executed through the hardware structure, the software module, or the combination thereof.

In the above-mentioned embodiments of the present disclosure, the methods have been described from the perspectives of the network side device and the UE. In order to achieve various functions in the embodiments of the present disclosure, each of the network side device and the UE includes a hardware structure and a software module, i.e., the functions are achieved in the form of the hardware structure, the software module, or the combination thereof. A certain function in these functions is executed through the hardware structure, the software module, or the combination thereof.

The present disclosure further provides in some embodiments a communication apparatus, which includes a transceiver module and a processing module. The transceiver module includes a transmission module and/or a reception module, the transmission module is configured to achieve a transmission function, the reception module is configured to achieve a reception function, and the transceiver module is configured to achieve the transmission function and/or the reception function.

The communication apparatus may be a terminal device (e.g., the terminal device mentioned hereinabove), or an apparatus in the terminal device, an apparatus capable of being used in combination with the terminal device. Alternatively, the communication apparatus may be a network device, an apparatus in the network device, or an apparatus capable of being used in combination with the network device.

The present disclosure further provides in some embodiments another communication device. The communication device may be a network device, a terminal device (e.g., the terminal device mentioned hereinabove), or a chip, a chip system or a processor which supports the network device to achieve the above-mentioned method, or a chip, a chip system or a processor which supports the terminal device to achieve the above-mentioned method. The apparatus is used to achieve the above-mentioned method, which will not be particularly defined herein.

The communication device may include one or more processors. The processor may be a general-purpose processor or special-purpose processor, e.g., a baseband processor or a Central Processing Unit (CPU). The baseband processor is configured to process a communication protocol as well as communication data, and the CPU is configured to control the communication device (e.g., a network side device, a baseband chip, a terminal device, a terminal device chip, a Distributed Unit (DU) or a Centralized Unit (CU)), execute a computer program, and process data in the computer program.

Optionally, the communication device further includes one or more memories storing therein a computer program. The computer program is executed by the processor, so that the communication device executes the above-mentioned method. Optionally, the memory further stores therein data. The communication device is arranged independent of, or integrated with, the memory.

Optionally, the communication device further includes a transceiver and an antenna. The transceiver is also called as a transceiver unit, a transceiver machine or a transceiver circuit, and it is configured to achieve a transmission function and a reception function. The transceiver includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication device further includes one or more interface circuits. The interface circuit is configured to receive a code instruction and transmit it to the processor. The processor executes the code instruction, so that the communication device implements the above-mentioned method.

The communication device is a terminal device (e.g., the terminal device mentioned hereinabove), and the processor is configured to execute the method in FIGs. 1 to 4.

The communication device is a network device, and the transceiver is configured to execute the method in FIGS. 5 to 7.

Optionally, the processor may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

Optionally, the processor stores therein a computer program, and the computer program is executed by the processor, so that the communication device implements the above-mentioned method. The computer program may be programmed in the processor, and in this case, the processor may be implemented through hardware.

Optionally, the communication device includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device mentioned hereinabove may be a network device or a terminal device (e.g., the terminal device mentioned hereinabove), but the scope of the communication device is not limited thereto. In addition, a structure of the communication device will not be particularly defined herein. The communication device may be an independent device, or a part of a large device. For example, the communication device may be:
(1) an independent IC, chip, chip system or chip sub-system;
(2) a set of one or more ICs (optionally, the IC set also includes a memory member for storing therein data and a computer program;
(3) an ASIC, e.g., a Modem;
(4) a module capable of being embedded into the other device;
(5) a receiver, a terminal device, a smart terminal device, a cellular phone, a wireless device, a handheld device, a mobile unit, a vehicle-mounted device, a network device, a cloud device, an artificial intelligence device, etc.; or
(6) the other device.

When the communication device is a chip or a chip system, the chip includes a processor and an interface. There may exist one or more processors, and one or more interfaces.

Optionally, the chip further includes a memory for storing therein necessary computer programs and data.

It should be appreciated that, various illustrative logical blocks and steps listed in the embodiments of the present disclosure may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a system for determining a Sidelink duration. The system includes the communication device serving as a terminal device (e.g., the first terminal device mentioned hereinabove) and the communication device serving as a network device, or includes the communication device serving as a terminal device (e.g., the first terminal device mentioned hereinabove) and the communication device serving as a network device.

The present disclosure further provides in some embodiments a readable storage medium storing therein an instruction. The instruction is executed by a computer so as to achieve the functions in any of the above-mentioned method embodiments.

The present disclosure further provides in some embodiments a computer program product. The computer program product is executed by a computer so as to achieve the functions in any of the above-mentioned method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of the same kind, the words "first", "second", "third", "A", "B", "C" and "D" are used to differentiate these technical features, without indicating any sequence or sizes thereof.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the appended claims.

It should be appreciated that, the present disclosure is not limited to the exact construction that has been described hereinabove and illustrated in the accompanying drawings, and that various modifications and changes can be made without departing from the scope thereof. It is intended that the scope of the present disclosure only be limited by the appended claims.

## Claims

1. A data transmission method, executed by a User Equipment (UE) in a non-connected state, comprising:
obtaining indication information sent by a network device, wherein the indication information is used to indicate the UE in the non-connected state to perform data transmission; and
triggering a non-connected state data transmission procedure to perform data transmission.

2. The method of claim 1, wherein the indication information comprises at least one of:
a first message for indicating the UE in the non-connected state to perform data reception;
a second message for indicating the UE in the non-connected state to perform data reception through a first bearer; or
a third message for indicating an initiation mode of the non-connected state data transmission procedure.

3. The method of claim 1, wherein obtaining indication information sent by a network device comprises any one of:
obtaining the indication information sent by the network device through a short message;
obtaining the indication information sent by the network device through a paging message; or
obtaining the indication information sent by the network device through the short message and the paging message.

4. The method of claim 1, further comprising determining non-connected state data transmission configuration information.

5. The method of claim 4, wherein the non-connected state data transmission configuration information comprises at least one of:
a fourth message for indicating whether or not the UE in the non-connected state performs data reception;
a fifth message for indicating whether or not the UE in the non-connected state performs data reception through a first bearer; or
a sixth message for indicating an initiation mode of the non-connected state data transmission procedure.

6. The method of claim 2 or 5, wherein the first bearer comprises at least one of: a bearer type indicator; a bearer identifier; a session identifier; a data flow identifier; or a logical channel identifier.

7. The method of claim 2 or 5, wherein the initiation mode of the non-connected state data transmission procedure comprises at least one of:
initiating the non-connected state data transmission procedure through a 4-step random access procedure;
initiating the non-connected state data transmission procedure through a 2-step random access procedure;
initiating the non-connected state data transmission procedure through a random access procedure;
initiating the non-connected state data transmission procedure through Configured Grant (CG)-non-connected state data transmission; or
initiating the non-connected state data transmission procedure through Semi-Persistent Scheduling (SPS)-non-connected state data transmission.

8. The method of claim 4, wherein determining non-connected state data transmission configuration information comprises at least one of:
determining the non-connected state data transmission configuration information based on an agreement in a protocol; or
obtaining the non-connected state data transmission configuration information sent by the network device.

9. The method of claim 8, wherein obtaining the non-connected state data transmission configuration information sent by the network device comprises at least one of:
obtaining the non-connected state data transmission configuration information sent by the network device through a connection release message; or
obtaining the non-connected state data transmission configuration information sent by the network device through system information.

10. The method of claim 2 or 5, wherein triggering a non-connected state data transmission procedure to perform data transmission comprises:
triggering the non-connected state data transmission procedure based on the initiation mode indicated in the indication information and/or the initiation mode indicated in the non-connected state data transmission configuration information, and using the first bearer for the non-connected state data transmission procedure.

11. The method of claim 10, further comprising:
in a case that the non-connected state data transmission procedure is triggered, resuming a Radio Bearer (RB) for data transmission.

12. The method of claim 10, further comprising:
in a case that the non-connected state data transmission procedure is triggered, resuming a Signaling Radio Bearer (SRB) for signaling transmission.

13. The method of claim 7, further comprising:
sending auxiliary information to the network device, wherein the auxiliary information is used to notify the network device of whether or not the non-connected state data transmission procedure is triggered by the UE,
wherein the auxiliary information comprises at least one of:
a seventh message for indicating whether or not a connection resume procedure is used for the non-connected state data transmission;
an eighth message for indicating whether or not a connection setup procedure is used for the non-connected state data transmission;
a ninth message for indicating whether or not a random access procedure is used for the non-connected state data transmission; or
bearer indication information of a bearer for initiating the non-connected state data transmission procedure.

14. The method of claim 13, wherein the bearer indication information comprises at least one of: a bearer type indicator; a bearer identifier; a session identifier; a data flow identifier; or a logical channel identifier.

15. The method of claim 13, wherein sending auxiliary information to the network device comprises at least one of:
sending the auxiliary information to the network device through a Physical Random Access Channel (PRACH) resource;
sending the auxiliary information to the network device through a connection resume message; or
sending the auxiliary information to the network device through a connection setup message.

16. A data transmission method, executed by a network device, comprising:
sending indication information to a UE, wherein the indication information is used to indicate the UE in a non-connected state to perform data transmission; and
performing data transmission based on a non-connected state data transmission procedure triggered by the UE.

17. The method of claim 16, wherein sending indication information to a UE comprises: in a case that a triggering condition is met, sending the indication information to the UE,
wherein the triggering condition comprises at least one of:
a condition where data needs to be sent to the UE supporting non-connected state data transmission;
a condition where data needs to be sent to the UE configured with non-connected state data transmission; or
a condition where data needs to be sent through a bearer corresponding to the UE and supporting non-connected state data transmission.

18. The method of claim 16, wherein the indication information comprises at least one of:
a first message for indicating the UE in the non-connected state to perform data reception;
a second message for indicating the UE in the non-connected state to perform data reception through a first bearer; or
a third message for indicating an initiation mode of the non-connected state data transmission procedure.

19. The method of claim 16, wherein sending indication information to a UE comprises any one of:
sending the indication information to the UE through a short message;
sending the indication information to the UE through a paging message; or
sending the indication information to the UE through the short message and the paging message.

20. The method of claim 16, further comprising: sending non-connected state data transmission configuration information to the UE.

21. The method of claim 20, wherein the non-connected state data transmission configuration information comprises at least one of:
a fourth message for indicating whether or not the UE in the non-connected state performs data reception;
a fifth message for indicating whether or not the UE in the non-connected state performs data reception through a first bearer; or
a sixth message for indicating an initiation mode of the non-connected state data transmission procedure.

22. The method of claim 18 or 21, wherein the first bearer comprises at least one of: a bearer type indicator; a bearer identifier; a session identifier; a data flow identifier; or a logical channel identifier.

23. The method of claim 18 or 21, wherein the initiation mode of the non-connected state data transmission procedure comprises at least one of:
initiating the non-connected state data transmission procedure through a 4-step random access procedure;
initiating the non-connected state data transmission procedure through a 2-step random access procedure;
initiating the non-connected state data transmission procedure through a random access procedure;
initiating the non-connected state data transmission procedure through CG-non-connected state data transmission; or
initiating the non-connected state data transmission procedure through SPS-non-connected state data transmission.

24. The method of claim 20, wherein sending non-connected state data transmission configuration information to the UE comprises at least one of:
sending the non-connected state data transmission configuration information to the UE through a connection release message; or
sending the non-connected state data transmission configuration information to the UE through system information.

25. The method of claim 16, further comprising:
in a case that the non-connected state data transmission procedure is triggered, resuming an RB for data transmission.

26. The method of claim 16, further comprising:
in a case that the non-connected state data transmission procedure is triggered, resuming an SRB for signaling transmission.

27. The method of claim 23, further comprising:
obtaining auxiliary information sent by the UE, wherein the auxiliary information is used to notify the network device of whether or not the non-connected state data transmission procedure is triggered by the UE,
wherein the auxiliary information comprises at least one of:
a seventh message for indicating whether or not a connection resume procedure is used for the non-connected state data transmission;
an eighth message for indicating whether or not a connection setup procedure is used for the non-connected state data transmission;
a ninth message for indicating whether or not a random access procedure is used for the non-connected state data transmission; or
bearer indication information of a bearer for initiating the non-connected state data transmission procedure.

28. The method of claim 27, wherein the bearer indication information comprises at least one of: a bearer type indicator; a bearer identifier; a session identifier; a data flow identifier; or a logical channel identifier.

29. The method of claim 27, wherein obtaining auxiliary information sent by the UE comprises at least one of:
obtaining the auxiliary information sent by the UE through a PRACH resource;
obtaining the auxiliary information sent by the UE through a connection resume message; or
obtaining the auxiliary information sent by the UE through a connection setup message.

30. A data transmission apparatus, comprising:
an obtaining module configured to obtain indication information sent by a network device, wherein the indication information is used to indicate a UE in a non-connected state to perform data transmission; and
a transmission module configured to trigger a non-connected state data transmission procedure to perform data transmission.

31. A data transmission apparatus, comprising:
a sending module configured to send indication information to a UE, wherein the indication information is used to indicate the UE in a non-connected state to perform data transmission; and
a transmission module configured to perform data transmission based on a non-connected state data transmission procedure triggered by the UE.

32. A communication device, comprising a processor and a memory storing therein a computer program, wherein the processor is configured to execute the computer program in the memory, to implement the data transmission method of any one of claims 1 to 11.

33. A communication device, comprising a processor and a memory storing therein a computer program, wherein the processor is configured to execute the computer program in the memory, to implement the data transmission method of any one of claims 12 to 17.

34. A communication device, comprising a processor and an interface circuit, wherein the interface circuit is configured to receive a code instruction and transmit the code instruction to the processor, and the processor is configured to execute the code instruction to implement the data transmission method of any one of claims 1 to 15.

35. A communication device, comprising a processor and an interface circuit, wherein the interface circuit is configured to receive a code instruction and transmit the code instruction to the processor, and the processor is configured to execute the code instruction to implement the data transmission method of any one of claims 16 to 27.

36. A computer-readable storage medium storing therein an instruction, wherein, when executed, the instruction implements the data transmission method of any one of claims 1 to 15.

37. A computer-readable storage medium storing therein instructions, wherein, when executed, the instructions implement the data transmission method of any one of claims 16 to 27.
